# EUROPEAN PATENT SPECIFICATION

(11) **EP 4 003 109 B1**
(45) Date of publication and mention of the grant of the patent: **01.11.2023**
(21) Application number: 20764764.5
(22) Date of filing: 30.07.2020
(51) Int. Cl.: A47J 31/52, A47J 31/36, A47J 42/44, A47J 31/42, A47J 31/06

(54) **SYSTEM AND METHOD FOR DISPENSING A BEVERAGE, PREFERABLY ESPRESSO COFFEE, WHEREIN THE FILTER-HOLDERS ARE FILLED WITH PREDETERMINED DOSES**
SYSTEM UND VERFAHREN ZUR AUSGABE EINES GETRÄNKS, VORZUGSWEISE ESPRESSOKAFFEE, WOBEI DIE FILTERHALTER MIT VORBESTIMMTEN DOSEN GEFÜLLT WERDEN
SYSTÈME ET PROCÉDÉ POUR DISTRIBUER UNE BOISSON, DE PRÉFÉRENCE DU CAFÉ EXPRESSO, LES PORTE-FILTRES ÉTANT REMPLIS DE DOSES PRÉDÉTERMINÉES

(30) Priority: 30.07.2019 IT 201900013374
(43) Date of publication of application: 01.06.2022
(73) Proprietor: CMA Macchine per caffè S.r.l., 31058 Susegana (TV) (IT)
(72) Inventor: NADALET, Paolo, 32100 Belluno (BL) (IT); ZONELLI, Andrea, 30020 Marcon (VE) (IT)
(74) Representative: Cammareri, Emanuele
(86) International application number: PCT/IB2020/057189
(87) International publication number: WO 2021/019485

(56) References cited:
- EP-A1- 2 314 188
- US-A- 4 497 243
- US-A1- 2010 198 413
- US-A1- 2016 296 061

## Description

### Field of the invention

The present invention concerns a method and a system for preparing a beverage, preferably espresso coffee, comprising at least one machine for dispensing the beverage, starting from a dose of ingredient ground by means of at least one grinding device of the system.

The dose of ground ingredient, preferably ground coffee, is delivered by the grinding device into at least one filter-holder which, as known, is constrained (removably) to the dispensing unit of the machine.

More in detail, the invention concerns a system for preparing a beverage, preferably espresso coffee, wherein the filter-holders are filled with predetermined doses of ground ingredient, preferably ground coffee, to dispense different types of beverages, and especially coffee depending on the dose of ingredient present in the filter-holder.

The present invention further concerns a method and a system for preparing a beverage, preferably espresso coffee, wherein it is possible to check the quality of the beverage dispensed while maintaining the desired quality high.

It should immediately be noted that although reference will be made to the use of coffee hereunder, such indication is not to be understood as limiting, since other ingredients can be used in the present invention, which ingredients are ground, by means of the grinding device (known in the art as grinder), according to the desired grain size and used to infuse the beverage by using an infusion liquid, for example hot water, preferably pressurized.

As is known, the filter-holders of such machines are filled with powdered coffee delivered from grinding devices (or grinders) when preparing the beverage.

The filter-holder, normally housed at a dispensing unit, is withdrawn and positioned at the grinding device where it is filled with a dose of powdered coffee.

### Known prior art

The known coffee machines are able to dispense different types of beverages, for example the same machine can dispense different coffee blends (decaffeinated, roasted coffee, Arabica blend, etc.), or the same machine can dispense beverages requiring different doses of ground coffee (for example an espresso and an American coffee) or different degrees of grinding, or the same machine can dispense two or more different coffee blends starting from different doses.

The versatility of a coffee machine is essential to satisfy the different tastes of customers, but it is also a source of problems and disadvantages in the state of the art.

In fact, since the coffee machine comprises a plurality of filter-holders which can be filled with a plurality of different blends and in different amounts (doses), it is possible that the beverages dispensed are erroneously not the ones ordered, i.e. different than those intended to be dispensed.

For example, it can happen that the user, for example the bartender, erroneously selects the grinder containing a coffee blend different than the one ordered by a customer, or that he dispenses a greater or lesser dose of coffee than the one desired into the filter-holder by means of the grinder.

EP2314188 describes a coffee machine wherein the filter-holder is provided with a recognition code present on the filter-holder and which is read by the machine and, in particular, by the specific dispensing unit in which the filter-holder is present.

The filter-holder is also recognized by the grinder, which provides to read the identification code of the filter-holder by means of an identification unit and, once identified (i.e. once the grinder recognizes that the filter-holder it was waiting for has been placed on it, since the machine has previously sent the data of the filter-holder in which to deliver the dose to the grinder), the grinder delivers the powdered coffee therein.

However, in this system, both the machine and, in particular, each dispensing unit of each machine, in addition to each grinding device, must be provided with an identification unit intended to recognize the code present on the filter-holder to allow the execution of the operation of filling the filter-holder and of dispensing the beverage. Thus, it is possible to prepare the beverage only following such recognition carried out first in the grinding device to deliver the ground coffee in the filter-holder and, subsequently, following the recognition in the dispensing unit of the machine, so that to be able to prepare the beverage. Moreover, in the system described in EP2314188, the operator must reserve the grinder and thus, by selecting from a specific delivering unit of the machine, a specific grinding device will be activated to deliver the dose of ground coffee only once that specific filter-holder placed under the delivery mouth of the grinding device used to deliver the dose of ground ingredient has been identified by the identification unit.

The need to provide an identification unit to recognize the filter-holder on each grinding device, as well as on each delivering unit of the machine, not only implies additional costs, but also a complication in terms of the constructive layout of the machine and of the grinding device.

Moreover, in the coffee machines of the type described, the filter-holders are subjected to high temperatures and frequent shocks, in addition to the fact that their surface is constantly in contact with coffee. This can make it difficult for the identification unit present on the grinder or on the delivering unit to read the code present on the filter-holder, with the consequence that the reading of the filter-holder can be wrong.

Moreover, in case of a malfunction of such identification unit of each delivering unit of the grinding device, the user will not be able to deliver the dose of ground coffee from the grinding device of the filter-holder and will not be able to dispense the beverage from the dispensing unit of the machine. In fact, as mentioned, the system according to EP2314188 necessarily provides for the recognition of the filter-holder and thus for the identification by an identification unit in order to both be able to fill the filter-holder with the dose of ground coffee and to dispense the beverage from the dispensing unit of the machine.

Object of the present invention is to overcome the drawbacks experienced in the systems of the known art and briefly discussed above.

In particular, object of the present invention is to provide a system and a method which allow to accurately fill a filter-holder of a machine, both with regard to the quality of the coffee needed to prepare the beverage requested, for example with regard to the amount of the dose, and to the degree to which the coffee must be ground for dispensing the beverage requested, and which is simple and economic to achieve.

A further object of the present invention is to provide a method for filling the filter-holders of an espresso coffee machine with a desired dose of ground coffee in a reliable way in order to reduce the risk of filling errors, but that simultaneously is not complicated with the need to provide an identification unit which leads to an increase in costs, as well as to an increase in the complexity of the machine and grinding device, and thus to an increase in the risk of malfunctions.

### Summary of the invention

These and further objects are achieved by means of a system according to claim 1 and by a method according to claim 9.

Further aspects/characteristics are set forth in the dependent claims. The system according to the invention comprises
- at least one machine for dispensing the beverage, comprising at least one dispensing unit, preferably a plurality of dispensing units, each comprising at least one control element for controlling the dispense of the beverage according to a predefined dispensing program;
- at least one grinding device, preferably a plurality of grinding devices, each comprising at least one container for an ingredient to be ground for preparing the beverage, at least one adjustable millstone for grinding said ingredient and forming a ground ingredient, at least one delivering unit for delivering a dose of ground ingredient in at least one filter-holder, at least one selection element for selecting a predetermined dose of ground ingredient to be delivered in the filter-holder,
- at least one filter-holder, preferably a plurality of filter-holders, each filter-holder being provided with at least one identification element.

The identification element is indicative of the predetermined dose of ground ingredient (and, in particular, of the amount of ground ingredient) intended to be delivered through the grinder and which the filter-holder is intended to contain. The at least one selection element of the at least one grinding device is associated with a respective filter-holder and is configured to be operated, in use, by a user depending on the identification element of the filter-holder inside which delivering the ground ingredient.

Advantageously, such a configuration allows the user to properly select the predetermined dose of ground ingredient intended to be delivered. The presence of the identification element of the filter-holder allows the user to immediately recognize the dose to be delivered.

Advantageously, the grinding system of the system according to the present invention must not necessarily be provided with recognition units for the filter-holder, which implies savings in terms of production costs and assembly times.

Moreover, in the system according to the present invention, the use of the filter-holder is not limited to a specific dispensing unit, but, on the contrary, more filter-holders can be used in different dispensing units.

According to an aspect of the present invention, at least one selection element of the at least one grinding device is associated with a respective filter-holder by means of the same identification element. In other words, according to an aspect, the selection element to select the dose on the grinder is provided with the same identification element of the filter-holder to which it is associated.

According to a further aspect, at least one filter-holder can be removably constrained to one or more dispensing units of the machine and the dispensing unit is configured to be operated by means of a control element, in use, controlled by a user depending on the filter-holder installed according to at least one corresponding predefined dispensing program.

According to a further aspect, the least one control element for controlling the dispense of beverage of at least one dispensing unit of the machine is associated with a respective filter-holder and is configured to be operated, in use, by a user depending on the filter-holder installed in the dispensing unit from which dispensing the beverage according to the corresponding predefined dispensing program.

The system according to the present invention allows to dispense a beverage according to a predefined dispensing program by means one or more dispensing units. In other words, the same beverage can be dispensed by a plurality of dispensing units.

Advantageously, such characteristic ensures the possibility to dispense a beverage according to any one of the dispensing programs stored, also in the event of damage to a dispensing unit.

According to a further aspect, the at least one control element for controlling the dispense of the beverage of at least one dispensing unit of the machine is associated with a respective filter-holder, by means of the same identification element. In other words, according to an aspect, the control element for controlling the dispense of the beverage is provided with the same identification element of the filter-holder to which it is associated.

Advantageously, the dispensing units of the system according to the present invention must not necessarily be provided with recognition units for the filter-holder, which implies savings in terms of production costs and assembly times.

According to a further aspect, the identification element is configured for the recognition by a user, preferably by means of visual recognition. In particular, the identification element comprises at least one letter, at least one name, at least one number, at least one color, at least one shape, at least one two-dimensional code, at least one sign, at least one surface machining, or a combination thereof, preferably said identification element comprises at least one color.

The recognition of the desired filter-holder, corresponding to the dose intended to be delivered, is operated between a plurality of available filter-holders.

Advantageously, such characteristic of visual recognition (for example by means of color or writing) allows a direct control by the user who selects the filter-holder and, consequently, the dose on the grinding device.

According to an aspect, the system comprises several filter-holders preferably provided with different identification elements.

The user, when wishing to deliver the ingredient into a filter-holder, will select the corresponding dose by operating the selection element (for example a button) of the grinder having the same identification element of the filter-holder in which to deliver the dose. According to an aspect, as mentioned, the user will then control the dispensing of the beverage according to a predetermined dispensing program which is associated with the dose of ingredient contained in the filter-holder since such control element for controlling the dispense (for example a button) has the same identification element (for example a color) of the filter-holder that is connected to the dispensing unit of the machine.

According to an aspect, the system according to the invention comprises at least one control unit connected to at least one machine and to at least one grinding device, said control unit allowing to transmit data, preferably in both ways, between said at least one machine and at least one grinding device.

In particular, the data transmitted by at least one grinding device to at least one machine comprises data relative to the dose selected by the operator by means of the at least one selection element of the grinding device and delivered by the grinding device, such data being sent to at least one dispensing unit of the machine.

Preferably, the data is sent from said at least one grinding device to one or more dispensing units of the machine(s) previously associated with a grinding device.

According to an aspect, the control unit is configured to enable at least one control element for controlling the dispense of the beverage of a dispensing unit depending on the data relative to the dose selected by the user by means of the at least one selection element of the grinding device.

Advantageously, such a configuration allows to dispense a plurality of dispensing programs from the same dispensing unit.

According to a further aspect, the data transmitted by at least one machine to at least one grinding device comprises data relative to the regulation of at least one grinding parameter, preferably such parameters comprise the position of the millstone, or the relative position of the millstones, or the grinding time, or the weight of the ground ingredient (for example detected by means of a sensor, preferably a load cell), or a combination thereof.

Advantageously, such characteristic allows to control one or more grinding parameters in real time, and thus allows to regulate one or more grinding parameters on the basis of such control.

According to a further aspect, the machine comprises at least one pressure meter and/or flow rate meter for at least one dispensing unit, which are configured to measure the pressure and/or flow rate during the dispense, the data relative to the regulation of at least one grinding parameter is calculated on the basis of a deviation of the measured pressure and/or flow rate value with respect to a predetermined pressure and/or flow rate profile associated with a dispensing program.

Moreover, the present invention concerns a method for dispensing a beverage, preferably espresso coffee, wherein at least one filter-holder is filled with at least one predetermined dose of ground ingredient, preferably by means of a system according to the invention described and/or claimed herein.

The method comprises the steps of:
- positioning a filter-holder provided with at least one identification element in a grinding device, said identification element being indicative of the predetermined dose of a ground ingredient;
- selecting at least one dose associated with at least one identification element of the filter-holder positioned in the grinding device by means of at least one selection element of the grinding device depending on the identification element of the filter-holder in which delivering the ground ingredient;
- delivering the predetermined dose corresponding to the selection element selected;
- displacing the filter-holder into at least one dispensing unit of a machine for dispensing the beverage starting from the ground ingredient contained in the filter-holder;
- dispensing the beverage by operating said at least one control element for controlling the dispense of the beverage of at least one dispensing unit.

Advantageously, the method according to the invention allows to deliver a desired dose into the filter-holder, without providing complex identification systems operated by a recognition unit.

The method ensures greater versatility and less waste of time.

According to an aspect, the selection of at least one predetermined dose by means of said at least one selection element of the at least one grinding device comprises the recognition, preferably the visual recognition, by the user, of the identification element of the filter-holder and the manual operation, by a user, of said at least one selection element of the at least one grinding device associated with a respective filter-holder.

The visual recognition of the filter-holder allows to avoid possible errors, or false verification errors of the filter-holder that can occur in coffee machines known in the art and which use recognition units for recognizing the filter-holder, for example sensors or identification units.

According to a further aspect, the dispensing step of the beverage comprises the step of selecting at least one predefined dispensing program by means of at least one control element for controlling the dispense of the beverage of at least one dispensing unit, depending on the identification element of the filter-holder installed in the dispensing unit from which dispensing the beverage according to the corresponding predefined dispensing program.

In particular, the step of selecting the dispensing program comprises the recognition, preferably the visual recognition, by a user, of the identification element of the filter-holder and the manual operation, by the user, of said control element for controlling the dispense of the beverage of at least one dispensing unit of the machine associated with a respective filter-holder.

According to an aspect, the method according to the invention comprises the step of transmitting, from at least one grinding device to at least one dispensing unit of a machine, data relative to the dose of ground ingredient the operator selected by means of the at least one selection element of the grinding device and delivered by the grinding device, preferably said one or more dispensing units of the machine being previously associated with a grinding device.

According to a further aspect, the step of dispensing the beverage by means of said at least one control element for controlling the dispense of the beverage is preceded by the step of enabling at least one control element for controlling the dispense of the beverage of a dispensing unit depending on the data relative to the dose selected by the operator by means of the at least one selection element of the grinding device.

In other words, according to an advantageous aspect of the invention, a grinding device can be associated with a dispensing unit, for example whenever a specific blend, such as decaffeinated one, needs to be delivered to a dispensing unit of the machine. The grinding device can also be associated with several dispensing units of the machine and thus, once the user has selected the dose and delivered it into the filter-holder, several dispensing units of the machine (associated with that grinding device) will be enabled to dispense and the user will be able to select from which dispensing unit to prepare the beverage by installing the filter-holder in the desired dispensing unit.

According to a further aspect, the method comprises at least one step of regulating at least one grinding parameter, preferably such parameters comprise the position of the millstone, or the relative position of the millstones, or the grinding time, or the weight of the ingredient, or a combination thereof, preferably said step of regulating at least one grinding parameter is carried out on the basis of the deviation of a measured pressure and/or flow rate value with respect to a predetermined pressure and/or flow rate profile and associated with a dispensing program.

It should be noted that the characteristics herein described and/or claimed with regard to the regulation of at least one grinding parameter of the grinding device can also be used independently of the presence or lack of the identification element for identifying the dose on the filter-holder.

In other words, that which is herein described and/or claimed with reference to the regulation of at least one grinding parameter can be used in a grinding device which is not necessarily provided with selection elements associated, through an identification element, with the filter-holder.

In fact, object of the present invention is also a system and a respective method for regulating at least one grinding parameter in a grinding device (or grinder).

The grinding device comprising at least one container of an ingredient to be ground for preparing the beverage, at least one adjustable millstone for grinding the ingredient and forming a ground ingredient, at least one delivering unit for delivering a dose of ground ingredient in at least one filter-holder, at least one selection element for selecting a predetermined dose of ground ingredient to be delivered in the filter-holder.

According to an aspect, the grinding device according to the invention comprises means adapted to regulate at least one grinding parameter, preferably such parameters comprise the position of the millstone, or the relative position of the millstones, or the grinding time, or the weight of the ingredient, or a combination thereof.

### Brief description of the drawings

These and other advantages of the present invention will become clearer in the following description and accompanying drawings, provided by way of example and without limitations, in which:
- Figure 1 is a schematic view of a possible embodiment of the system according to the present invention, wherein there are a machine for dispensing the beverage, a grinding device and three filter-holders;
- Figure 2 is a schematic view of a further possible embodiment of the system according to the present invention, wherein there are a machine for dispensing the beverage, two grinding devices and three filter-holders;
- Figure 3 schematically shows the hydraulic circuit of a machine for dispensing the beverage which can be used in the system according to the present invention, the machine is provided with at least one pressure and/or flow rate sensor of the infusion liquid, preferably hot pressurized water;
- Figures 4 and 5 schematically show a possible predefined profile respectively of the pressure and flow rate of the infusion liquid for a dispensing program, the deviation tolerance from the predefined profile stored in the control unit of the system according to the invention is also shown.

### Method for implementing the invention

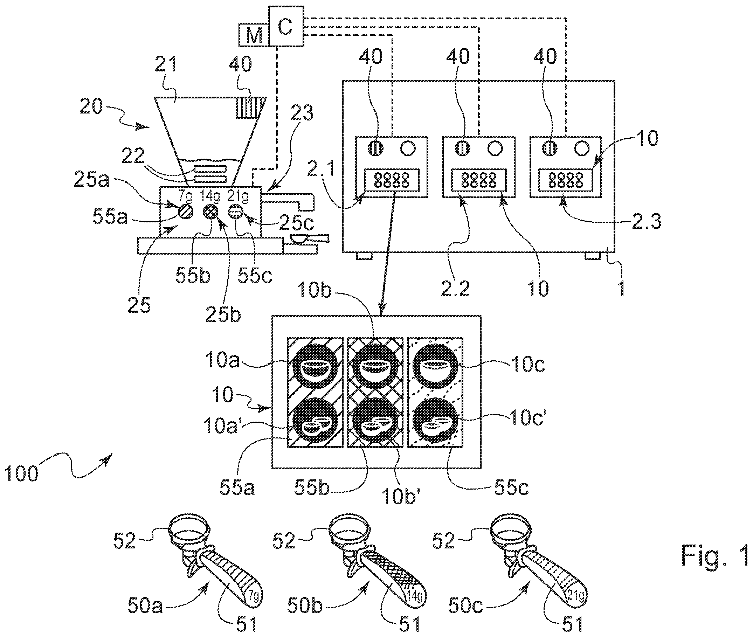

Figure 1 schematically shows a possible embodiment of a system 100 for dispensing a beverage, preferably espresso coffee, according to the present invention and which comprises at least one machine 1 for dispensing the beverage and having at least dispensing unit 2.1, 2.2, 2.3, preferably a plurality of dispensing units.

The system 100 further comprises at least one grinding device 20, 120 and at least one filter-holder 50a, 50b, 50c, preferably a plurality of filter-holders, for example three filter-holders, as shown in the embodiment depicted in the figures.

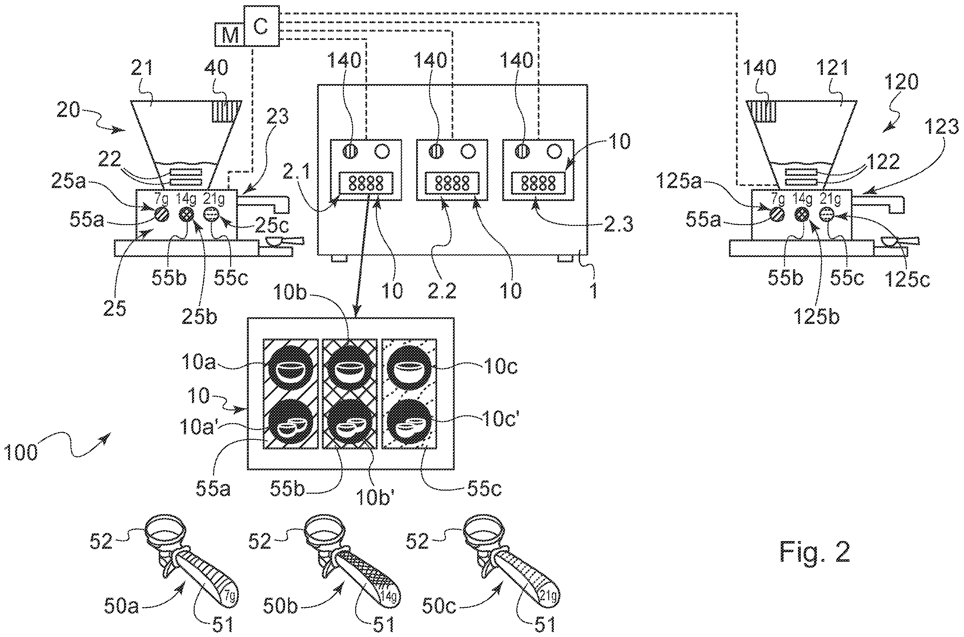

In the embodiment shown in figure 1 and in figure 2, the system is provided with a machine 1 for dispensing the beverage, and in particular espresso coffee, a machine commonly used in bars or restaurants. Although reference was made to a single machine 1, the system 100 according to the invention can comprise several machines. The number of dispensing units 2.1, 2.2, 2.3 of each machine can also vary and can be for example equal to three, like in the embodiment shown in the figures, but can vary and can also be greater.

The number of grinding devices, 20, 120, also simply denoted by the term grinder hereunder, can also vary according to the needs and configurations of the system 100. For example, several grinding devices can be used to deliver different ingredients and in particular different coffees, the grinders can for example be loaded with decaffeinated, Arabica, Robusta coffee and other blends, etc.

In the embodiment schematically shown in figure 1, there is only one grinding device 20, whereas there are two grinding devices 20, 120 in the embodiment shown in figure 2.

As far as the filter-holders 50a, 50b, 50c are concerned, it should be noted that, in the system according to the invention, filter-holders of the known type are used and generally comprise a handle 51 which, in use, is gripped by the user, and a seat 52 (generally cup-shaped and preferably provided with a mesh or filter in its lower portion before the outlet section to hold the ground ingredient during the infusion and the consequent dispensing of the beverage).

The filter-holder can be provided with specific elements for removably connecting with at least one dispensing unit of the at least one machine, for example comprising one or more lugs protruding from the upper part of the seat 52, which allow the connection for example of the bayonet type or by translating into appropriate guides of the dispensing unit. In fact, in this regard, the dispensing unit of the machine is typically provided with means for removably receiving at least one filter-holder 50a, 50b, 50c.

According to an aspect of the present invention, it should be noted that the number of filter-holders usable in the system 100 can vary according to need and is not limited to the number of dispensing units of the machine(s). In fact, according to an aspect of the present invention, a filter-holder is not limited to being used only with a specific and respective dispensing unit of the machine, but a filter-holder can be used on several units of the machine since there is no recognition by an identification unit of the filter-holder which thus allows the beverage to be dispensed only in a determined filter-holder and thus prevents the dispense into a different filter-holder.

Advantageously, according to an aspect of the present invention, the system can comprise a number of filter-holders greater than the number of dispensing units of the machine 1 (or machines). As better shown hereunder, according to an aspect of the present invention, a control element for controlling the dispense of the beverage 10a, 10a', 10b, 10b', 10c, 10c' according to a predefined dispensing program can allow the beverage to be dispensed in several filter-holders.

Returning to the machine 1 for preparing the beverage, it comprises at least one dispensing unit 2.1, 2.2, 2.3, preferably a plurality of dispensing units, each comprising at least one control element for controlling the dispense of the beverage 10, 10a, 10a', 10b, 10b', 10c, 10c' according to a predefined dispensing program.

In a possible embodiment, the control elements can comprise a peripheral device 10, for example a push-button panel with a plurality of buttons 10a, 10a', 10b, 10b', 10c, 10c', each of which corresponds to a predefined dispensing program, or a display and/or touch device or similar means through which it is possible to select a predefined dispensing program. In other words, the control element for controlling the dispense of the beverage 10a, 10a', 10b, 10b', 10c, 10c' of each dispensing unit can comprise a manually operated element or an element of the digital or virtual type. An embodiment comprising a physical manual device (a push-button panel with a plurality of buttons) is for example shown in figures 1 and 2, however the possibility that the control element can comprise a digital device, for example shown on a display, is not excluded. In this embodiment, the control element for controlling the dispense of the beverage 10, 10a, 10a', 10b, 10b', 10c, 10c' is an image, or icon, used to show the command and which can be displayed on a touch device, for example a touchscreen.

It should be noted that the push-button panel of the first dispensing unit 2.1 is shown in detail, for simplicity of illustration, in figure 1, however the other dispensing units 2.2, 2.3 of the machine are also provided with a similar push-button panel.

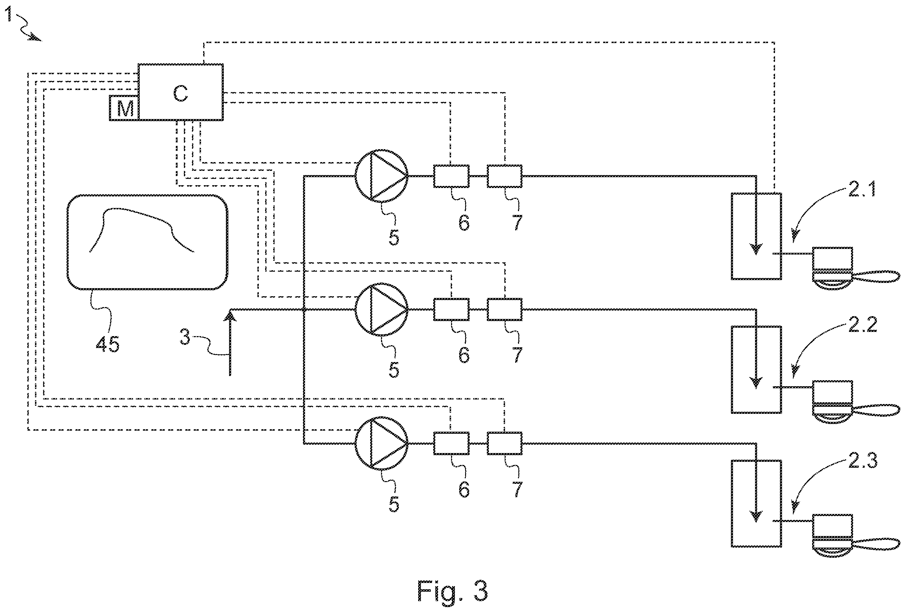

As shown for example in figure 3, which schematically shows the hydraulic circuit of a machine 1 for dispensing the beverage and usable in the system 100 according to the invention, such machine comprises three dispensing units 2.1, 2.2, 2.3 for the beverage.

There is no need to elaborate on the detailed description of such components since they are known and present in the machines 1 for preparing beverages, and in particular coffee, such as for example machines for espresso coffee.

In the embodiment shown, each group 2.1, 2.2, 2.3 is provided with its own pump 5; it should be noted that a single pump supplying pressurized water to the three dispensing units can also be present. The following description will refer to one of the three dispensing units, although the description is also applicable to the similar units present in the machine.

The machine 1 comprises a source 3 of an infusion liquid (for convenience henceforth identified, without wanting to lose generality, as "water"), connected to the pump 5 to supply pressurized water to a dispensing unit. The machine further comprises at least one boiler (not shown for simplicity of illustration), or similar heating means for heating the water. A hydraulic circuit fluidically connects the pump 5, the boiler and the dispensing unit 2.1, 2.2, 2.3 to which, as mentioned, a filter-holder is removably constrained.

The machine preferably further comprises at least one between a flow rate sensor (for example a flowmeter) 6 and a pressure sensor 7, which are preferably arranged upstream of the dispensing unit where the filter-holder is constrained and downstream of the pump 5. As better shown hereunder, the pressure and/or flow rate values detected by such sensors can be used to control the regulation of the grinding device.

The machine 1 according to the invention further comprises at least one control unit C adapted to store, process and transmit information and data between two or more elements of the system 100.

More in detail, according to a possible embodiment, the control unit C can be provided with, or connected to, at least one memory unit M in which one or more predefined dispensing programs for dispensing the beverage is/are stored, and in which one or more predefined dose(s) delivered from the grinding device into the filter-holder is/are stored.

In particular, the control unit C is adapted to store a plurality of information, among which the plurality of dispensing programs selectable by an operator by means of the control means 10a, 10a', 10b, 10b', 10c, 10c'.

The control unit C can be configured to enable at least one control element for controlling the dispense of the beverage 10a, 10a', 10b, 10b', 10c, 10c' of a dispensing unit 2.1, 2.2, 2.3 according to such dispensing programs stored. It should be noted that the control unit can be remote or arranged in the machine, or in the grinding device, or in both. The control unit C can thus comprise several separate units, or sub-units, communicating with each other.

As mentioned, the system 100 according to the invention further comprises at least one grinding device 20, 120, preferably a plurality of grinding devices to grind the ingredient, preferably coffee beans, for preparing the beverage.

The grinding device 20, 120, or grinder, comprises at least one container 21, 121 for the ingredient to be ground for preparing the beverage, at least one adjustable millstone 22, 122 for grinding the ingredient so that to obtain a ground ingredient to be delivered, at least one delivering unit 23, 123 for delivering a dose of ground ingredient. It should be noted that the delivering device can comprise or be associated with a doser to deliver a predetermined dose of ground ingredient. For example, the dose of ground ingredient can be checked by detecting the weight of the ground ingredient released in the filter-holder, for example detected by means of a sensor, preferably a load cell. As an alternative, the dose of ground ingredient is controlled by acting on the grinding time.

According to possible embodiments schematically shown herein, like for example shown in figures 1 and 2, there are one or two grinding devices.

The grinding device 20, 120 usable in the system 100 according to the invention comprises at least one selection element 25a, 25b, 25c, 125a, 125b, 125c for selecting a predetermined dose of ground ingredient to be delivered.

In particular, the selection elements 25a, 25b, 25c, 125a, 125b, 125c can comprise a peripheral device 25, 125, for example a push-button panel with a plurality of buttons 25a, 25b, 25c, 125a, 125b, 125c each corresponding to a predefined dose of ground coffee to be delivered, or a touch device or similar means by means of which it is possible to select the predefined dose of ground ingredient to be delivered.

More in detail, as already mentioned with reference to the at least one control element for controlling the dispense of the beverage 10, 10a, 10a', 10b, 10b', 10c, 10c' of each dispensing unit, also said selection elements 25a, 25b, 25c, 125a, 125b, 125c of the grinding device 20, 120 for selecting a predetermined dose of ground ingredient to be delivered can comprise a manually operated element or an element of the digital or virtual type. An embodiment comprising a physical manual device (a push-button panel with a plurality of buttons) is shown in figures 1 and 2, however the possibility that the selection element can comprise a digital device, for example shown on a display, in not excluded. In this embodiment, the selection element 25a, 25b, 25c, 125a, 125b, 125c for selecting a predetermined dose of ground ingredient to be delivered is an image, or icon, used to show the command and which can be displayed on a touch device, for example a touchscreen.

The control unit C allows to transmit data, preferably in both ways, between the machine 1 and at least one grinding device 20, 120, preferably a plurality of grinding devices, thus when the desired dose of coffee is selected by the operator by means of the selection elements 25a, 25b, 25c, 125a, 125b, 125c, such information is transmitted from the at least one grinding device 20, 120 to the machine 1, in particular to the at least one dispensing unit 2.1, 2.2, 2.3 of the machine 1.

The system 100 is provided with means for transmitting such information, for example a Bluetooth module, a Wi-Fi connection, or other wireless or cabled communication systems.

In a possible embodiment, the data relative to the dose selected by the operator by means of the at least one selection element 25a, 25b, 25c, 125a, 125b, 125c of the grinding device(s) 20, 120 is sent to all dispensing units 2.1, 2.2, 2.3 of the machine 1.

The control unit C is configured to enable the control elements for controlling the dispense of the beverage 10a, 10a', 10b, 10b', 10c, 10c' of one or more dispensing units 2.1, 2.2, 2.3 depending on the data relative to the dose selected by the operator by means of the at least one selection element 25a, 25b, 25c, 125a, 125b, 125c of the at least one grinding device.

In an embodiment, it is possible to program the control unit C so that the data is sent from a grinding device 20, 120 to only one dispensing unit 2.1, 2.2, 2.3 of the machine, previously associated with the grinding device 20, 120.

For example, in the embodiment shown in figure 2, the system comprises two grinders 20, 120, containing two different blends, for example a blend of Arabica coffee and a blend of decaffeinated coffee, and three dispensing units 2.1, 2.2, 2.3 are present on the machine 1.

In such case, the system 100 can be implemented so that the decaffeinated blend is dispensed only from one of the three dispensing units 2.1, i.e. the control unit C is configured to enable only one dispensing unit 2.1 depending on the data relative to the dose selected by the operator by means of the at least one selection element 25a, 25b, 25c of the grinding device 20.

The control elements for controlling the dispense of the beverage 10a, 10a', 10b, 10b', 10c, 10c' of the dispensing units 2.1, 2.2, 2.3 according to the invention are selectively enabled by the control unit C to be able to be selected by an operator, following the selection, by the operator, of the desired predetermined dose of powdered coffee to be delivered, by selecting one of the selection elements 25a, 25b, 25c, 125a, 125b, 125c of the dose to be delivered of the grinding device.

In other words, as schematically shown in figures 1 and 2, the information relative to the dose of ground product selected by the selection means 25a, 25b, 25c, 125a, 125b, 125c of the grinding device 20, 120, is transmitted from the control unit C (refer for example to the connection lines schematically depicted with dotted lines) to the dispensing units 2.1, 2.2, 2.3 of the machine 1, for selectively enabling the respective control elements 10a, 10a', 10b, 10b', 10c, 10c'.

One or more dispensing units can be associated with the first grinding device 20 and, in the embodiment shown in figure 2, only the first dispensing unit 2.1 is associated with the first grinder 20 and thus, when the user selects the dose by means of the selection means 25a, 25b, 25c of the grinding device 20, the control unit C will enable the dispense according to the programs associated with the dose selected on the grinder 20 only in the first dispensing unit. 2.1

One or more dispensing units can be associated with the second grinding device 120 and, in the embodiment shown in figure 2, the second and the third dispensing units 2.2., 2.3 are associated with the second grinder 120 and thus, when the user selects the dose by the selection means 125a, 125b, 125c of the second grinding device 120, the control unit will enable the dispense by means of the control elements 10a, 10a', 10b, 10b', 10c, 10c', according to the programs associated with the dose selected on the second grinder 120, only in the second and third dispensing units 2.2, 2.3.

The control elements 10a, 10a', 10b, 10b', 10c, 10c' enabled are distinguishable and recognizable by the operator for example by means of visual recognition with a warning light, a LED, or a similar indicator light. This way, an operator can recognize the dispensing programs that can be operated, depending on the dose of available ground product delivered by the grinding device 20, 120.

The association of the grinding device 20, 120 with one or more dispensing units 2.1., 2.2, 2.3 of the machine can occur by means of an identification element 40, 140, preferably an identification element recognizable by the user by means of visual recognition. Similar identification elements, which will be described hereunder with reference to the filter-holder, can be used to associate a grinding device with one or more dispensing units 2.1, 2.2, 2.3 of the machine 1.

For example, the association of the grinding device with a dispensing unit can occur by means of a given color. Although having made reference to the association by means of a color, other embodiments wherein the grinding device is associated with at least one dispensing unit of at least one machine by means of other identification elements comprising at least one among a name, a number, a shape, a two-dimensional code, a sign, a surface machining or a combination thereof, are not however to be excluded.

It should be noted that in the accompanying figures 1 and 2, the identification element 40, 140 is shown with a given hatching (with vertical lines for the element 40 and with lines perpendicular to each other for the element 140). Although such identification element was schematically shown, it can obviously also comprise a given color, or other preferably visible signs, such as described above. Reference will be made to identification elements of given colors hereunder, that which is herein described is also applicable to other embodiments of identification elements.

For example, according to an embodiment, such association is highlighted for example by means of a selector and indicator lights (or warning lights) arranged at the dispensing units of the machine.

For example, according to an embodiment, an indicator light (or warning light) orange in color can be present to identify the association with the first grinding device 20 and a red indicator light (or warning light) can be present to identify the association with the second grinding device 120.

The association of the dispensing units with the grinding device can be done in the installation step or as a pre-configuration of the machine 1 during the production step.

The grinding device can be recognizable by making the same color (or other identification element, refer for example to the identification elements 40, 140 in figures 1 and 2) available on the dispensing unit of the machine associated therewith, for example, the color of the indicator light, for example the grinder can be recognizable by a detail of the bodywork painted with the same color as that of the indicator light of the dispensing unit of the machine associated therewith.

For example, the grinding device could be provided with two or more colored rings, or parts of the casing (possibly replaceable) that are assembled to the grinding device during the installation step.

As mentioned, the system 100 according to the invention preferably comprises a plurality of filter-holders 50a, 50b, 50c, for example three filter-holders.

Each filter-holder is provided with at least one identification element 55a, 55b, 55c indicative of the predetermined dose of ground ingredient it is able to contain and that can be delivered by means of the grinding device 20, 120.

For example, as shown in figures 1 and 2, each filter-holder can be configured to house a specific dose of ground ingredient, and in particular a specific amount of ground ingredient, for example respectively 7 grams, 14 grams and 21 grams.

The identification element 55a, 55b, 55c of each filter-holder 50a, 50b, 50c will indicate, to the user, the dose, and in particular the amount of ground ingredient that such filter-holder is intended to contain.

In a possible embodiment shown in figures 1 and 2, the identification element 55a, 55b, 55c is adapted for the recognition by an operator, preferably by means of visual recognition.

For example, the identification element 55a, 55b, 55c can comprise at least one among a name, a number, a color, a shape, a two-dimensional code, a sign or a combination thereof.

According to a preferred embodiment, the identification element 55a, 55b, 55c comprises a color (it should be noted that in figures 1 and 2 the different identification elements of the filter-holders are schematically depicted by different hatchings), for example a part of the filter-holder (preferably the handle or part of the handle 51) is colored of a specific color that is associated with a specific dose of ingredient.

For example, according to a possible embodiment, a filter-holder 50a is intended to house 7 grams of ingredient and has the color yellow, constituting its identification element 55a, at least on part of its visible surface.

The second filter-holder 50b is intended to house 14 grams of ingredient and has the color green, constituting its identification element 55b, at least on part of its visible surface.

The third filter-holder 50c is intended to house 21 grams of ingredient and has the color blue, constituting its identification element 55c, at least on part of its visible surface.

It should be noted that in figures 1 and 2 attached, the identification elements 55a, 55b, 55c are depicted for more clarity with given hatchings (with inclined parallel lines for the element 55a, with inclined lines perpendicular to each other for the element 55b and with dots for the element 55c). Although such identification element was depicted in such way, it can obviously also comprise a given color, or other preferably visible signs, such as described above. Reference will be made to identification elements of given colors hereunder, that which is herein described is also applicable to other embodiments of identification elements.

Obviously, the color (or other identification element) and dose (for example amount of ground ingredient) association scheme can advantageously be modified with respect to the one described above.

In general, it should be noted that in the system according to the present invention, each filter-holder is provided with at least one identification element (55a, 55b, 55c) different from the other. In other words, the identification elements are different from each other and each is associated (according to a predefined scheme known to the user) with a given dose of ground ingredient, and in particular with an amount of ground ingredient to be housed in the respective filter-holder.

Moreover, according to an aspect of the system 100 according to the invention, the at least one selection element for selecting the dose of ground product to be delivered 25a, 25b, 25c, 125a, 125b, 125c of the at least one grinding device 20, 120 is associated with a respective filter-holder 50a, 50b, 50c by means of the identification element 55a, 55b, 55c of the filter-holder.

In particular, in a possible embodiment, each selection element 25a, 25b, 25c, 125a, 125b, 125c is provided with the same identification element 55a, 55b, 55c of the filter-holder with which it is associated.

For example, as shown in figures 1 and 2, each grinding device 20, 120 comprises three selection elements corresponding to three deliverable doses of ground coffee and associated with three identification elements 55a, 55b, 55c of the respective filter-holders 50a, 50b, 50c, for example because each has the color of a filter-holder.

For example, the grinding device 20, 120 comprises three selection elements 25a, 25b, 25c, 125a, 125b, 125c, for example three buttons that are associated with a given dose of ingredient, and in particular with a given amount of ingredient, for example respectively 7 grams, 14 grams and 21 grams. Each button has the same color (and thus the identification element) that identifies, in the filter-holder, the dose that can be housed therein. For example, the selection element 25a (for example a physical or digital button) of the grinder 20 has at least one part colored of yellow color, or can be illuminated of yellow color (by means of appropriate lighting means) to deliver, when selected by the user, a dose (7 grams in the embodiment described) equal to the one associated with the first filter-holder 50a provided with the yellow-colored identification element 55a.

The selection element 25b (for example a physical or digital button) of the grinder 20 has at least one part colored of green color, or can be illuminated of green color (by means of appropriate lighting means) to deliver, when selected by the user, a dose (14 grams in the embodiment described) equal to the one associated with the second filter-holder 50b provided with the green-colored identification element 55b.

The selection element 25c (for example a physical or digital button) of the grinder 20 has at least one part colored of blue color, or can be illuminated of blue color (by means of appropriate lighting means) to deliver, when selected by the user, a dose (21 grams in the embodiment described) equal to the one associated with the second filter-holder 50c provided with the blue-colored identification element 55b.

That which is described above with reference to the grinding device 20 is also applicable to the at least one further grinding device 120 which can be present in the system 100 (for example the second grinding device 120 for example present in the embodiment schematically shown in figure 2).

In this regard, it should be noted that, for example, the selection element 125a (for example a physical or digital button) of the grinder 120 has at least one part colored of yellow color, or can be illuminated of yellow color (by means of appropriate lighting means) to deliver, when selected by the user, a dose (7 grams in the embodiment described) equal to the one associated with the first filter-holder 50a provided with the yellow-colored identification element 55a. The selection element 125b (for example a physical or digital button) of the grinder 120 has at least one part colored of green color, or can be illuminated of green color (by means of appropriate lighting means) to deliver, when selected by the user, a dose (14 grams in the embodiment described) equal to the one associated with the second filter-holder 50b provided with the green-colored identification element 55b.

The selection element 125c (for example a physical or digital button) of the grinder 120 has at least one part colored of blue color, or can be illuminated of blue color (by means of appropriate lighting means) to deliver, when selected by the user, a dose (21 grams in the embodiment described) equal to the one associated with the second filter-holder 50c provided with the blue-colored identification element 55b.

It should be noted that the control unit C is adapted to store a plurality of doses of ground ingredient to be delivered, which are selectable by an operator by means of the selection elements 25a, 25b, 125a, 125b, 125c placed on the grinding device 20, 120.

In a possible embodiment according to the invention, the doses of ground ingredient to be delivered correspond to a plurality of doses expressed in terms of amounts of ingredient (for example expressed in deliverable grams), but the doses can also be stored in reference to volumetric units of measurement.

Moreover, according to an aspect of the system 100 according to the invention, at least one control element for controlling the dispense of the beverage 10a, 10a', 10b, 10b', 10c, 10c' of at least one dispensing unit 2.1, 2.2, 2.3 is associated with a respective filter-holder 50a, 50b, 50c and is configured to be operated, in use, by a user depending on the filter-holder installed in the dispensing unit from which dispensing the beverage according to the corresponding predefined dispensing program.

In particular, the at least one control element for controlling the dispense of the beverage 10a, 10a', 10b, 10b', 10c, 10c' is associated with at least one filter-holder 50a, 50b, 50c by means of the same identification element 55a, 55b, 55c.

For example, as shown for example in figures 1 and 2, each dispensing unit 2.1, 2.2, 2.3 comprises six control elements corresponding to six available dispensing programs, which are associated with the three identification elements 55a, 55b, 55c of the respective filter-holders 50a, 50b, 50c, for example because each has the color (and in general the identification element) of a filter-holder.

For example, each dispensing unit 2.1, 2.2, 2.3 comprises six control elements for controlling the dispense of the beverage 10a, 10a', 10b, 10b', 10c, 10c', for example six buttons that are associated with a given dose of ingredient, and in particular with a given amount of ingredient, for example 7 grams, 14 grams and 21 grams. Each button has the same color (and thus the identification element) that identifies, in the filter-holder, the dose that can be housed therein.

For example, the control elements 10a and 10a' (for example two physical or digital buttons) of a dispensing unit have at least one part colored of yellow color, or can be illuminated of yellow color (by means of appropriate lighting means) to execute, when selected by the user, a respective dispensing program for example for a single cup (button 10a) or for two cups (button 10a') which are adapted to the dose (7 grams in the embodiment described) equal to the one associated with the first filter-holder 50a provided with the yellow-colored identification element 55a.

The control elements 10b and 10b' (for example two physical or digital buttons) of a dispensing unit have at least one part colored of green color, or can be illuminated of green color (by means of appropriate lighting means) to execute, when selected by the user, a respective dispensing program for example for a single cup (button 10b) or for two cups (button 10b') which are adapted to the dose (14 grams in the embodiment described) equal to the one associated with the second filter-holder 50b provided with the green-colored identification element 55b.

The control elements 10c and 10c' (for example two physical or digital buttons) of a dispensing unit have at least one part colored of blue color, or can be illuminated of blue color (by means of appropriate lighting means) to execute, when selected by the user, a respective dispensing program for example for a single cup (button 10c) or for two cups (button 10c') which are adapted to the dose (21 grams in the embodiment described) equal to the one associated with the second filter-holder 50c provided with the blue-colored identification element 55c.

Obviously, that which is described above is also applicable to different dispensing units 2.2, 2.3 also provided with the control elements for controlling the dispense of the beverage 10a, 10a', 10b, 10b', 10c, 10c'.

It should be remembered that, as discussed above, according to an aspect of the present invention, the dispensing units can be associated in a predetermined way with a grinding device and thus the grinding device, by the control unit C, will enable only the dispensing units associated therewith for the dispense, and will in particular enable the dispensing programs associated with the dose selected by the user on the grinding device.

It should be noted that although reference was made to two dispensing programs associated with a dose, refer for example to the dispensing controls 10a, 10a' relative to the dispense of a single cup or two cups, it should be noted that other dispensing programs, having for example given dispensing profiles for example with different pressures and/or flow rates or comprising a pre-infusion step, etc., can be associated with a dose (for example 7 grams).

In other words, more than one dispensing program, preferably more than two dispensing programs can be associated with a dose and, thus, made available and can thus be operated by the user, when the user selects the dose with which the dispensing programs are associated on the grinding device. As mentioned, according to an aspect, the dispensing programs will be recognizable by means of the same identification element associated with the dose selected by the user on the grinding device. For example, two or more yellow-colored buttons can be present on a dispensing unit and can be operated when the user will select the yellow button on the grinding device, a filter-holder distinguished by the color yellow having been placed in the grinder.

With reference to figure 1 or 2, the steps of a possible embodiment of the method for dispensing a beverage according to the invention will now be described by way of example and without limitations. It should be remembered that the embodiments shown in figures 1 and 2 are different from each other in that two grinding devices 20, 120 are associated with the machine in the system of figure 2 and, thus, each of them can be associated and thus allow the dispense of the beverage from one or more dispensing units of the machine, whereas only one grinding device 1 is associated with the machine 1 in the system of figure 1, and thus preferably all dispensing units 2.1, 2.2, 2.3 of the machine 1 are enabled to dispense the beverage.

When the user decides to dispense a beverage, the operator grasps a filter-holder 50a, 50b, 50c, for example by withdrawing it from a dispensing unit of the machine, for example the user grasps the filter-holder 50a having the yellow-colored identification element 55a which, according to the embodiment described herein, is associated with a dose of 7 grams. The user positions the filter-holder 50a in one of the grinders 20, 120 associated with the machine 1. The user selects the dose associated with the identification element 55a of the filter-holder, and thus selects the yellow-colored button 25a (or other similar selection element 25a) corresponding to the color of the filter-holder 50a. The grinder delivers the predetermined dose, in this case 7 grams. The grinder 20, 120, by the control unit C, sends the type of dose being delivered to the machine.

According to an aspect of the present invention, the information or data sent to the machine by the grinding device can comprise one or more of the following parameters, preferably a combination of the following parameters:
- Identification code of the grinding device ("coffee grinder ID");
- The date on which the dose was started to be ground ("Start grinded data," for example in the YYYY-MM-DD format);
- The time at which the dose was started to be ground ("Start time data" for example in the (hh:mm:ss) format);
- The amount of the dose expressed in grams ("Grams of ground coffee" for example expressed in [g]);
- The position of the millstones ("Millstones position" for example expressed in [µm]);
- The duration of the grinding of the dose ("Grinding time dose" for example expressed in [ms])
- The type of dose ("Type of dose" [for example 7g - 14g - 21g]);
- The date on which the dose was finished to be ground ("Stop grinded data," for example in the (YYYY-MM-DD format);
- The time at which the dose was finished to be ground ("Stop time data" for example in the (hh:mm:ss) format).

The machine 1, through the control unit C, receives the information on the dose that the grinder 20, 120 is delivering and makes available the buttons 10a and 10a' (or similar control elements for controlling the dispense of the machine) corresponding to the yellow-colored dose just selected by the user in the various dispensing units 2.1, 2.2, 2.3 (possibly only in those previously associated with the grinder being used).

The buttons 10a and 10a' (or similar control elements for controlling the dispense of the machine) corresponding to the yellow-colored dose just selected by the user, as mentioned, can be made available in more dispensing units.

The user selects the button 10a, 10a' available for the dispensing according to the dispensing program intended to be carried out, for example a single cup (button 10a) or a double cup (button 10a'). As mentioned, the programs associated with the dose are not limited to the dispense of a single cup or two cups, but can comprise specific pressure and/or flow rate patterns.

It should be noted that, according to an embodiment, as soon as the user presses the yellow-colored dispense button in a dispensing unit, he immediately and simultaneously releases all buttons 10a, 10a' relative to the same dose in the other dispensing units.

As mentioned previously, according to a possible aspect, the machine 1, preferably each dispensing unit 2.1, 2.2, 2.3 of the machine 1, comprises a flowmeter 6 (and in general a flow rate sensor) adapted to directly or indirectly measure the amount of liquid supplied to the filter-holder when it is connected to a dispensing unit. In general, the flow meter 6 allows to directly or indirectly measure the amount of beverage dispensed.

As mentioned, the machine, and in particular each dispensing unit, can comprise a pressure sensor 7 adapted to directly or indirectly determine the pressure of the liquid being supplied to the filter-holder, and in general the pressure in the hydraulic circuit, preferably between the pump and the filter-holder.

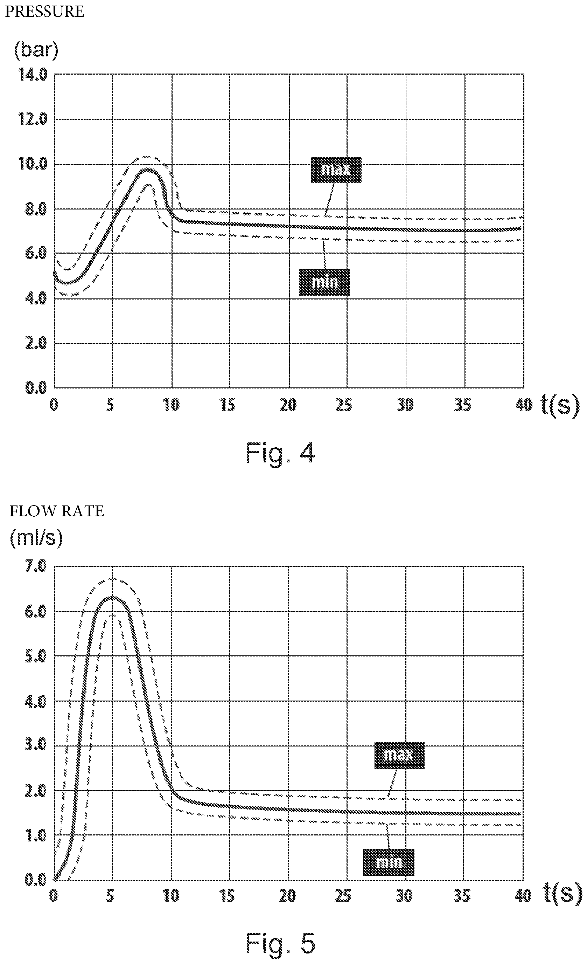

Moreover, according to an aspect of the present invention, the pressure being measured by means of the pressure sensor 7 and/or the flow rate being measured by means of the flow meter 6 is/are displayed on a display 45 or other displaying device. According to possible embodiments, the pressure value can be displayed instantaneously and/or can be reported in a graph in which the variation in the pressure value and/or in the flow rate over time is shown (refer for example to figures 4 and 5).

More in detail, the machine according to the invention provides for the presence of a display 45 connected to the control unit C. As mentioned above, the flow rate sensor and/or the pressure sensor is/are connected to the control unit C and is/are able to generate a flow rate and pressure measurement signal, respectively, a signal that is read by the control unit C. The signals generated and read are representative of the flow rate and the pressure during the dispensing of the beverage. Such values can be displayed on a display 45 in the form of a graph or profile (refer for example to figures 4 and 5).

In a possible embodiment, the machine 1 comprises a memory unit M for storing at least one plurality of data selected among: the pressure values in the hydraulic circuit, the flow rates in the hydraulic circuit. The pressure and/or flow rate profiles can be generated, stored and eventually displayed on the display. In detail, according to an aspect, the possibility to detect, during the dispensing, the pressure and/or flow rate values in the hydraulic circuit and to generate a plurality of pressure and/or flow rate profiles indicative of the respective values during the dispensing, is provided. In other words, the flow rate and/or pressure patterns of a dispense step during the dispense step itself can be seen, practically in real time, on the display.

As already mentioned, preferably the profiles or values detected are used to control at least one grinding parameter. In fact, according to an aspect, the machine 1 checks the dispensing parameters (for example in terms of pressure and/or flow rate) and communicates, by means of the control unit C, to a grinding device (and in particular the grinding device from which the dose of ingredient subject to being checked for the dispensing parameters is deriving) any correction to be made to the position of the millstone, or to the distance between the millstones (in the event more millstones are present), or to the grinding time, or to the weight of the ground ingredient.

Obviously, the position of the millstone(s) can be modified according to known means which will not be described in detail hereunder. For example, the grinding device can be provided with specific means such as for example an actuator able to modify the position of the millstone(s), for example by acting on a regulation ring.

In fact, according to an aspect, the data transmitted by at least one machine 1 to at least one grinding device 20, 120 comprises data relative to the regulation of at least one grinding parameter, preferably such parameters comprise the position of the millstone, or the relative position of the millstones, or the grinding time, or the weight of the ingredient, or a combination thereof. As mentioned, according to an aspect, the data relative to the regulation of at least one grinding parameter is calculated on the basis of a deviation of the measured pressure and/or flow rate value with respect to the predetermined pressure and/or flow rate profile and associated with a dispensing program (as for example shown in figures 4 and 5).

The machine 1, and in particular the control unit C, analyzes the pattern of the flow and/or pressure by checking if the pattern respects the preset parameters, i.e. if it follows a predefined profile and, for example, if the value deviates, for example, of a preset tolerance value (under or above the predefined profile).

If the real pattern of the pressure (for example if during the dispensing at least one measured value) exceeds the maximum value (predefined value plus a tolerance value, for example denoted in figures 4 and 5 by the term max), the machine 1, through the control unit C, transmits the data relative to the correction of the grinding parameters to the grinder, for example to widen the millstones, i.e. to increase the relative distance between the millstones.

If the real pattern of the pressure (for example if during the dispensing at least one measured value) exceeds the minimum value and is thus under it (predefined value minus a tolerance value, for example denoted in figures 4 and 5 by the term min), the machine 1, through the control unit C, transmits the data relative to the correction of the grinding parameters to the grinder, for example to tighten the millstones, i.e. to decrease the relative distance between the millstones.

In combination or as an alternative to the check on the pressure, the check can be carried out on the flow (flow rate of the infusion fluid), indicative also of the volume/amount of infusion fluid delivered and thus of the beverage dispensed.

If the real pattern of the flow rate (for example if during the delivery at least one measured value) exceeds the maximum value (predefined value plus a tolerance value), the machine 1, through the control unit C, transmits the data relative to the correction of the grinding parameters to the grinder, for example to tighten the millstones, i.e. to decrease the relative distance between the millstones.

If the real pattern of the flow rate (for example if during the delivery at least one measured value) exceeds the minimum value (predefined value minus a tolerance value), the machine 1, through the control unit C, transmits the data relative to the correction of the grinding parameters to the grinder, for example to widen the millstones, i.e. to increase the relative distance between the millstones.

The execution of the checking operations and the correction of the grinding carried out by monitoring the delivery flow rate and/or pressure with respect to a predetermined profile, taking into account an admissible deviation or tolerance from the predetermined nominal value, can be carried out so that the control unit C sends instructions for correcting the grinding parameters (for example the position of the millstone(s) or the grinding time, or the weight of the ground ingredient) only after the error with respect to the predetermined profile has repeated itself for a number of predefined times, for example for 5 consecutive dispenses of the dispensing program for that dose.

Such value can for example be selected by the user and can be equal to a number less than or greater than five, for example, 2 times, 3 times, 4 times, or even 6 times, 7 times or 8 times.

According to an aspect, the control unit C, and in particular the memory unit M store all the deliveries for a predefined time period, for example for one week. According to an aspect, if more than 24 hours have passed from the first incorrect delivery and from the second incorrect delivery, the first incorrect delivery will be eliminated and will not be taken into consideration. If more than 48 hours have passed from the first incorrect delivery and from the last incorrect delivery (the fifth), all incorrect deliveries older than 48 hours will be eliminated.

In this regard, it should be noted that the grinding device, and in particular the control unit C provided with a memory unit M, can comprise a buffer, or another temporary memory element able to store all the dispenses of the beverage of the last 24 hours in the grinding device.

Obviously, that which is described and/or claimed herein with reference to the system for preparing the beverage according to the invention can also be used with reference to the method for preparing the beverage also object of the present invention, or vice-versa.

## Claims

1. System (100) for dispensing a beverage, preferably espresso coffee, comprising:
- at least one machine (1) for dispensing the beverage, comprising at least one dispensing unit (2.1, 2.2, 2.3), preferably a plurality of dispensing units, each comprising at least one control element for controlling the dispense of the beverage (10a, 10a', 10b, 10b', 10c, 10c') according to a predefined dispensing program;
- at least one grinding device (20, 120), preferably a plurality of grinding devices, each comprising at least one container (21, 121) for an ingredient to be ground for preparing the beverage, at least one adjustable millstone (22, 122) for grinding said ingredient and forming a ground ingredient, at least one delivering unit (23, 123) for delivering a dose of ground ingredient in at least one filter-holder (50a, 50b, 50c), at least one selection element (25a, 25b, 25c, 125a, 125b, 125c) for selecting a predetermined dose of ground ingredient to be delivered in the filter-holder,
- at least one filter-holder (50a, 50b, 50c), preferably a plurality of filter- holders, each filter-holder being provided with at least one identification element (55a, 55b, 55c),
wherein said identification element (55a, 55b, 55c) is indicative of the predetermined dose of ground ingredient;
wherein said at least one selection element (25a, 25b, 25c, 125a, 125b, 125c) of the at least one grinding device (20, 120) is associated with a respective filter-holder (50a, 50b, 50c) and is configured to be operated, in use, by a user depending on the identification element (55a, 55b, 55c) of the filter-holder inside which delivering the ground ingredient.

2. System according to claim 1, wherein the at least one selection element (25a, 25b, 25c, 125a, 125b, 125c) of the at least one grinding device (20, 120) is associated with a respective filter-holder (50a, 50b, 50c) by means of the same identification element (55a, 55b, 55c), said selection element (25a, 25b, 25c, 125a, 125b, 125c) being provided with the same identification element (55a, 55b, 55c) of the filter- holder to which it is associated.

3. System according to claim 1 or 2, wherein said at least one control element for controlling the dispense of the beverage (10a, 10a', 10b, 10b', 10c, 10c') of at least one dispensing unit (2.1, 2.2, 2.3) of the machine is associated with a respective filter-holder (50a, 50b, 50c) and is configured to be operated, in use, by a user depending on the filter-holder installed in the dispensing unit from which dispensing the beverage according to the corresponding predefined dispensing program, preferably said at least one control element for controlling the dispense of the beverage (10a, 10a', 10b, 10b', 10c, 10c') of at least one dispensing unit (2.1, 2.2, 2.3) of the machine (1) is associated with a respective filter- holder (50a, 50b, 50c), by means of the same identification element (55a, 55b, 55c), said control element for controlling the dispense of the beverage (10a, 10a', 10b, 10b', 10c, 10c') being provided with the same identification element (55a, 55b, 55c) of the filter- holder (50a, 50b, 50c) to which it is associated.

4. System according to any one of the preceding claims, wherein said identification element (55a, 55b, 55c) is configured for recognition by a user, preferably by means of visual recognition, preferably said identification element (55a, 55b, 55c) comprises at least one letter, at least one name, at least one number, at least one color, at least one shape, at least one two-dimensional code, at least one sign, a surface machining, or a combination thereof.

5. System according to any one of the preceding claims, comprising at least one control unit (C) connected to said at least one machine (1) and to at least one grinding device (20, 120), said control unit allowing to transmit data, preferably in both ways, between said at least one machine (1) and at least one grinding device (20, 120).

6. System according to claim 5, wherein the data transmitted by at least one grinding device (20, 120) to at least one machine (1) comprises data relative to the dose selected by the operator by means of the at least one selection element (25a, 25b, 25c, 125a, 125b, 125c) of the grinding device and delivered by the grinding device (20, 120), such data being sent to at least one dispensing unit (2.1, 2.2, 2.3) of the machine preferably being sent to one or more dispensing units (2.1, 2.2, 2.3) of the machine, preferably the data being sent from said grinding device to one or more dispensing units of the machine, previously associated with a grinding device (20, 120).

7. System according to claim 6, wherein said control unit (C) is configured to enable at least one control element for controlling the dispense of the beverage (10a, 10a', 10b, 10b', 10c, 10c') of a dispensing unit depending on the data relative to the dose selected by the operator by means of the at least one selection element (25a, 25b, 25c, 125a, 125b, 125c) of the grinding device.

8. System according to any one of claims 5 to7, wherein the data transmitted by at least one machine (1) to at least one grinding device (20, 120) comprises data relative to the regulation of at least one grinding parameter, preferably such parameters comprise the position of the millstone, or the relative position of the millstones, or the grinding time, or the weight of the ingredient, or a combination thereof, preferably said machine (1) comprises at least one pressure meter (7) and/or flow rate meter (6) for at least one dispensing unit (2.1, 2.2, 2.3), which are configured to measure the pressure and/or flow rate during the dispense step, said data relative to the regulation of at least one grinding parameter being calculated on the basis of a deviation of at least one measured pressure and/or flow rate value with respect to a predetermined pressure and/or flow rate profile associated with a dispensing program.

9. Method for dispensing a beverage, preferably espresso coffee, wherein at least one filter-holder (50a, 50b, 50c) is filled with at least one predetermined dose of ground ingredient, preferably by means of a system 100 according to any one of the preceding claims, the method comprising the steps of:
- positioning a filter-holder (50a, 50b, 50c) provided with at least one identification element (55a, 55b, 55c) in a grinding device (20, 120), said identification element (55a, 55b, 55c) being indicative of the predetermined dose of a ground ingredient;
- selecting at least one dose associated with at least one identification element (55a, 55b, 55c) of the filter-holder (50a, 50b, 50c) positioned in the grinding device by means of at least one selection element (25a, 25b, 25c, 125a, 125b, 125c) of the grinding device depending on the identification element (55a, 55b, 55c) of the filter-holder in which delivering the ground ingredient;
- delivering the predetermined dose corresponding to the selection element (25a, 25b, 25c, 125a, 125b, 125c) selected;
- displacing the filter-holder (55a, 55b, 55c) in at least one dispensing unit (2.1, 2.2, 2.3) of a machine (1) for dispensing the beverage starting from the ground ingredient contained in the filter-holder;
- dispensing the beverage by operating said at least one control element for controlling the dispense of the beverage (10a, 10a', 10b, 10b', 10c, 10c') of at least one dispensing unit (2.1, 2.2, 2.3).

10. Method according to claim 9, wherein the selection of at least one predetermined dose by means of said at least one selection element (25a, 25b, 25c, 125a, 125b, 125c) of the grinding device (20, 120) comprises the recognition, preferably the visual recognition, by the user, of the identification element of the filter-holder and the manual operation, by a user, of said at least one selection element (25a, 25b, 25c, 125a, 125b, 125c) of the at least one grinding device (20, 120) associated with a respective filter-holder (50a, 50b, 50c).

11. Method according to any one of claims 9 to 10, wherein the dispensing step of the beverage comprises the step of selecting at least one predefined dispensing program by means of at least one control element for controlling the dispense of the beverage (10a, 10a', 10b, 10b', 10c, 10c') of at least one dispensing unit (2.1, 2.2, 2.3), depending on the identification element (55a, 55b, 55c) of the filter-holder installed in the dispensing unit (2.1, 2.2, 2.3) from which dispensing the beverage according to the corresponding predefined dispensing program.

12. Method according to claim 11, wherein the step of selecting the dispensing program comprises the recognition, preferably the visual recognition, by a user, of the identification element (55a, 55b, 55c) of the filter-holder and the manual operation, by the user, of said control element for controlling the dispense of the beverage (10a, 10a', 10b, 10b', 10c, 10c') of at least one dispensing unit (2.1, 2.2, 2.3) of the machine associated with a respective filter-holder (50a, 50b, 50c).

13. Method according to any one of claims 9 to 12, comprising the step of transmitting, from at least one grinding device (20, 120) to at least one dispensing unit of a machine (1), the data relative to the dose of ground ingredient the operator selected by means of the at least one selection element (25a, 25b, 25c, 125a, 125b, 125c) of the grinding device and delivered by the grinding device (20, 120), preferably said data relative to the dose selected by the operator by means of the at least one selection element (25a, 25b, 25c, 125a, 125b, 125c) of the grinding device (20, 120) is sent to one or more dispensing units (2.1, 2.2, 2.3) of the machine, preferably the data being sent from said grinding device to one or more dispensing units of the machine, previously associated with a grinding device (20, 120).

14. Method according to any one of claims 9 to 13, wherein the step of dispensing the beverage by means of said at least one control element for controlling the dispense of the beverage (10a, 10a', 10b, 10b', 10c, 10c') is preceded by the step of enabling at least one control element for controlling the dispense of the beverage (10a, 10a', 10b, 10b', 10c, 10c') of a dispensing unit depending on the data relative to the dose selected by the operator by means of the at least one selection element (25a, 25b, 25c, 125a, 125b, 125c) of the grinding device.

15. Method according to any one of claims 9 to 14, comprising at least one step of regulating at least one grinding parameter, preferably such parameters comprise the position of the millstones, or the relative position of the millstones, or the grinding time, or the weight of the ingredient, or a combination thereof, preferably said step of regulating at least one grinding parameter is carried out on the basis of the deviation of at least one measured pressure and/or flow rate value with respect to a predetermined pressure and/or flow rate profile and associated with a dispensing program.

## Patentansprüche

1. System (100), um ein Getränk, vorzugsweise Espresso-Kaffee, auszugeben, umfassend:
- mindestens eine Maschine (1) zur Ausgabe des Getränks mit mindestens einer Ausgabeeinheit (2.1, 2.2, 2.3), vorzugsweise eine Vielzahl von Ausgabeeinheiten, die jeweils mit mindestens einem Steuerelement zur Steuerung der Ausgabe des Getränks (10a, 10a', 10b, 10b', 10c, 10c') gemäß einem vorgegebenen Ausgabeprogramm versehen sind;
- mindestens eine Mahlvorrichtung (20, 120), vorzugsweise eine Vielzahl von Mahleinheiten, die jeweils mindestens einen Behälter (21, 121) für eine zu mahlende Zutat für die Zubereitung des Getränks, mindestens ein einstellbares Mahlmittel (22, 122) zum Mahlen der Zutat und zur Bildung einer gemahlenen Zutat, mindestens eine Ausgabeeinheit (23, 123) zum Abgeben einer Dosis der gemahlenen Zutat in einen Filterhalter (50a, 50b, 50c), mindestens ein Auswahlelement (25a, 25b, 25c, 125a, 125b, 125c) zum Auswählen einer vorbestimmten Dosis der gemahlenen Zutat, die in den Filterhalter abgegeben werden soll,
- mindestens einen Filterhalter (50a, 50b, 50c), vorzugsweise eine Vielzahl von Filterhaltern, wobei jeder Filterhalter mit mindestens einem Identifizierungselement (55a, 55b, 55c) versehen ist,
wobei das genannte Identifizierungselement (55a, 55b, 55c) die vorbestimmte Dosis der gemahlenen Zutat anzeigt;
wobei mindestens ein genanntes Auswahlelement (25a, 25b, 25c, 125a, 125b, 125c) mindestens einer Mahlvorrichtung (20, 120) mit einem jeweiligen Filterhalter (50a, 50b, 50c) verbunden und so konfiguriert ist, dass es im Gebrauch von einem Benutzer in Abhängigkeit von dem Identifizierungselement (55a, 55b, 55c) des Filterhalters betätigt wird, dem die gemahlene Zutat zugeführt wird.

2. System nach Anspruch 1, wobei mindestens ein Auswahlelement (25a, 25b, 25c, 125a, 125b, 125c) mindestens einer Mahlvorrichtung (20, 120) mittels desselben Identifizierungselements (55a, 55b, 55c) einem jeweiligen Filterhalter (50a, 50b, 50c) zugeordnet ist, wobei das genannte Auswahlelement (25a, 25b, 25c, 125a, 125b, 125c) mit demselben Identifizierungselement (55a, 55b, 55c) des Filterhalters versehen ist, dem es zugeordnet ist.

3. System nach Anspruch 1 oder 2, wobei mindestens ein genanntes Steuerelement zur Steuerung der Ausgabe des Getränks (10a, 10a', 10b, 10b', 10c, 10c') mindestens einer Ausgabeeinheit (2.1, 2.2, 2. 3) der Maschine mit einem jeweiligen Filterhalter (50a, 50b, 50c) verbunden und so konfiguriert ist, dass es im Gebrauch von einem Benutzer in Abhängigkeit von dem in der Ausgabeeinheit installierten Filterhalter bedient wird, aus dem das Getränk gemäß dem entsprechenden vordefinierten Ausgabeprogramm ausgegeben wird, wobei vorzugsweise mindestens ein genanntes Steuerelement zur Steuerung der Ausgabe des Getränks (10a, 10a', 10b, 10b', 10c, 10c') mindestens einer Ausgabeeinheit (2.1, 2.2, 2.3) der Maschine (1) mittels desselben Identifizierungselements (55a, 55b, 55c) mit einem jeweiligen Filterhalter (50a, 50b, 50c) verbunden ist, wobei das genannte Steuerelement zur Steuerung der Ausgabe des Getränks (10a, 10a', 10b, 10b', 10c, 10c') mit demselben Identifizierungselement (55a, 55b, 55c) des Filterhalters (50a, 50b, 50c) versehen ist, mit dem es verbunden ist.

4. System nach einem der vorhergehenden Ansprüche, wobei das genannte Identifikationselement (55a, 55b, 55c) zur Erkennung durch den Benutzer konfiguriert ist, vorzugsweise mittels visueller Erkennung, wobei das genannte Identifikationselement (55a, 55b, 55c) vorzugsweise mindestens einen Buchstaben, mindestens einen Namen, mindestens eine Zahl, mindestens eine Farbe, mindestens eine Form, mindestens einen zweidimensionalen Code, mindestens ein Zeichen, mindestens eine Oberflächenbearbeitung oder eine Kombination davon umfasst.

5. System nach einem der vorhergehenden Ansprüche, umfassend mindestens eine Steuereinheit (C), die mit mindestens einer genannten Maschine (1) und mit mindestens einer Mahlvorrichtung (20,120) verbunden ist, wobei die Steuereinheit die Übertragung von Daten, vorzugsweise in beide Richtungen, zwischen mindestens einer Maschine (1) und mindestens einer Mahlvorrichtung (20, 120) ermöglicht.

6. System nach Anspruch 5, wobei die von mindestens einer Mahlvorrichtung (20, 120) an mindestens eine Maschine (1) übertragenen Daten bezüglich der vom Bediener mittels mindestens eines Auswahlelements (25a, 25b, 25c, 125a, 125b, 125c) der Mahlvorrichtung ausgewählten und von der Mahlvorrichtung (20, 120) abgegebenen Dosis umfassen, wobei solche Daten an mindestens eine Ausgabeeinheit (2.1, 2.2, 2.3) der Maschine gesendet werden, wobei die Daten vorzugsweise von der genannten Mahlvorrichtung an eine oder mehrere Ausgabeeinheiten der Maschine gesendet werden, die zuvor mit einer Mahlvorrichtung (20, 120) verbunden wurden.

7. System nach Anspruch 6, wobei die Steuereinheit (C) so konfiguriert ist, dass sie mindestens ein Steuerelement zur Steuerung der Ausgabe des Getränks (10a, 10a', 10b, 10b', 10c, 10c') aus einer Ausgabeeinheit je nach den Daten bezüglich der Dosis aktiviert, die von dem Bediener mittels mindestens eines Auswahlelements (25a, 25b, 25c, 125a, 125b, 125c) der Mahlvorrichtung ausgewählt wird.

8. System nach einem der Ansprüche 5 bis 7, wobei die von mindestens einer Maschine (1) an mindestens eine Mahlvorrichtung (20, 120) übertragenen Daten Daten bezüglich der Regelung mindestens eines Mahlparameters umfassen, wobei solche Parameter vorzugsweise die Position des Mahlsteins oder die relative Position der Mahlsteine oder die Mahldauer oder das Gewicht der Zutat oder eine Kombination davon umfassen, wobei die genannte Maschine (1) vorzugsweise mindestens einen Druckmesser (7) und/oder Durchflussmesser (6) für mindestens eine Ausgabeeinheit (2.1, 2.2, 2.3) umfasst, die konfiguriert sind, um den Druck und/oder die Durchflussmenge während des Ausgabeschrittes zu messen, wobei die Daten bezüglich der Regulierung mindestens eines Mahlparameters auf der Grundlage mindestens einer Abweichung eines gemessenen Druck- und/oder Durchflussmengenwertes in Bezug auf ein vorbestimmtes Druck- und/oder Durchflussmengenprofil berechnet werden, das mit einem Ausgabeprogramm verbunden ist.

9. Verfahren zur Ausgabe eines Getränks, vorzugsweise Espressokaffee, bei dem mindestens ein Filterhalter (50a, 50b, 50c) mit mindestens einer vorbestimmten Dosis einer gemahlenen Zutat gefüllt wird, vorzugsweise mittels eines Systems 100 nach einem der vorhergehenden Ansprüche, wobei das Verfahren die folgenden Schritte umfasst:
- Positionieren eines Filterhalters (50a, 50b, 50c), der mit mindestens einem Identifizierungselement (55a, 55b, 55c) versehen ist, in einer Mahlvorrichtung (20, 120), wobei das Identifizierungselement (55a, 55b, 55c) die vorbestimmte Dosis einer gemahlenen Zutat anzeigt;
- Auswählen mindestens einer Dosis, die mit mindestens einem Identifizierungselement (55a, 55b, 55c) des in der Mahlvorrichtung positionierten Filterhalters (50a, 50b, 50c) verbunden ist, mittels mindestens eines Auswahlelements (25a, 25b, 25c, 125a, 125b, 125c) der Mahlvorrichtung in Abhängigkeit von dem Identifizierungselement (55a, 55b, 55c) des Filterhalters, in das die gemahlene Zutat abgegeben wird;
- Abgeben der vorbestimmten Dosis entsprechend dem gewählten Auswahlelement (25a, 25b, 25c, 125a, 125b, 125c);
- Verschieben des Filterhalters (55a, 55b, 55c) in mindestens einer Ausgabeeinheit (2.1, 2.2, 2.3) einer Maschine (1) zum Ausgeben des Getränks aus der im Filterhalter enthaltenen gemahlenen Zutat;
- Ausgeben des Getränks durch Betätigung mindestens eines Steuerelements zur Steuerung der Ausgabe des Getränks (10a, 10a', 10b, 10b', 10c, 10c') mindestens einer Ausgabeeinheit (2.1, 2.2, 2.3).

10. Verfahren nach Anspruch 9, wobei das Auswählen mindestens einer vorbestimmten Dosis mittels mindestens eines genannten Auswahlelements (25a, 25b, 25c, 125a, 125b, 125c) der Mahlvorrichtung (20,120) das Erkennen, vorzugsweise das visuelle Erkennen, des Identifizierungselements des Filterhalters durch den Benutzer und das manuelle Betätigen, durch den Benutzer, mindestens eines Auswahlelements (25a, 25b, 25c, 125a, 125b, 125c) mindestens einer Mahlvorrichtung umfasst, die einem entsprechenden Filterhalter (50a, 50b, 50c) zugeordnet ist.

11. Verfahren nach einem der Ansprüche 9 bis 10, wobei der Schritt des Ausgebens des Getränks den Schritt des Auswählens mindestens eines vordefinierten Ausgabeprogramms mittels mindestens eines Steuerelements zur Steuerung der Ausgabe des Getränks (10a, 10a', 10b, 10b', 10c, 10c') mindestens einer Ausgabeeinheit (2.1, 2.2, 2.3)umfasst, abhängig von dem Identifizierungselement (55a, 55b, 55c) des in der Ausgabeeinheit (2.1, 2.2, 2.3) installierten Filterhalters, aus dem das Getränk gemäß dem entsprechenden vordefinierten Ausgabeprogramm ausgegeben wird.

12. Verfahren nach Anspruch 11, wobei der Schritt des Auswählens des Ausgabeprogramms das Erkennen, vorzugsweise das visuelle Erkennen durch den Benutzer, des Identifizierungselements (55a, 55b, 55c) des Filterhalters und die manuelle Betätigung des Steuerelements durch den Benutzer zur Steuerung der Ausgabe des Getränks (10a, 10a', 10b, 10b', 10c, 10c') mindestens einer Ausgabeeinheit (2. 1, 2.2, 2.3) der Maschine umfasst, die mit einem entsprechenden Filterhalter (50a, 50b, 50c) verbunden ist.

13. Verfahren nach einem der Ansprüche 9 bis 12, umfassend den Schritt des Übertragens der Daten bezüglich der vom Bediener mittels mindestens eines Auswahlelements (25a, 25b, 25c, 125a, 125b, 125c) der Mahlvorrichtung (20, 120) ausgewählten und von mindesten einer Mahlvorrichtung (20, 120) abgegebenen Dosis der gemahlenen Zutat an mindestens eine Ausgabeeinheit der Maschine (1) und von der Mahlvorrichtung (20,120) abgegeben wird, wobei vorzugsweise die Daten bezüglich der vom Bediener mittels mindestens eines Auswahlelements (25a, 25b, 25c, 125a, 125b, 125c) der Mahlvorrichtung (20, 120) ausgewählten Dosis an eine oder mehrere Ausgabeeinheiten (2.1, 2.2, 2.3) der Maschine gesendet werden, wobei vorzugsweise die Daten von der Mahlvorrichtung an eine oder mehrere Ausgabeeinheiten der Maschine gesendet werden, die zuvor mit einer Mahlvorrichtung (20, 120) verbunden waren.

14. Verfahren nach einem der Ansprüche 9 bis 13, wobei dem Schritt des Ausgebens des Getränks mittels mindestens eines der genannten Steuerelemente zur Steuerung des Ausgebens des Getränks (10a, 10a', 10b, 10b', 10c, 10c') der Schritt des Aktivierens mindestens eines Steuerelements zur Steuerung des Ausgebens des Getränks (10a, 10a', 10b, 10b', 10c, 10c') einer Ausgabeeinheit vorausgeht, in Abhängigkeit von den Daten bezüglich der vom Bediener mittels mindestens eines Auswahlelements (25a, 25b, 25c, 125a, 125b, 125c) der Mahlvorrichtung ausgewählten Dosis.

15. Verfahren nach einem der Ansprüche 9 bis 14, umfassend mindestens einen Schritt des Regulierens mindestens eines Mahlparameters, wobei solche Parameter vorzugsweise die Position der Mahlsteine oder die relative Position der Mahlsteine oder die Mahldauer oder das Gewicht der Zutat oder eine Kombination davon umfassen, wobei der Schritt des Regulierens mindestens eines Mahlparameters vorzugsweise auf der Grundlage der Abweichung mindestens eines gemessenen Druck- und/oder Durchflusswerts von einem vorbestimmten Druck- und/oder Durchflussprofil und in Verbindung mit einem Dosierprogramm durchgeführt wird.

## Revendications

1. Système (100) de distribution d'une boisson, de préférence du café expresso, comprenant :
- au moins une machine (1) pour distribuer la boisson, comprenant au moins une unité de distribution (2.1, 2.2, 2.3), de préférence une pluralité d'unités de distribution, comprenant chacune au moins un élément de commande pour commander la distribution de la boisson (10a, 10a', 10b, 10b', 10c, 10c') selon un programme de distribution prédéfini ;
- au moins un dispositif de broyage (20, 120), de préférence une pluralité de dispositifs de broyage, comprenant chacun au moins un récipient (21, 121) pour un ingrédient à broyer pour la préparation de la boisson, au moins une meule réglable (22, 122) pour broyer ledit ingrédient et former un ingrédient broyé, au moins une unité de distribution (23, 123) pour délivrer une dose d'ingrédient moulu dans au moins un porte-filtre (50a, 50b, 50c), au moins un élément de sélection (25a, 25b, 25c, 125a, 125b, 125c) pour sélectionner une dose prédéterminée d'ingrédient moulu à délivrer dans le porte-filtre,
- au moins un porte-filtre (50a, 50b, 50c), de préférence une pluralité de porte-filtres, chaque porte-filtre étant doté d'au moins un élément d'identification (55a, 55b, 55c),
dans lequel ledit élément d'identification (55a, 55b, 55c) indique la dose prédéterminée d'ingrédient moulu ;
dans lequel ledit au moins un élément de sélection (25a, 25b, 25c, 125a, 125b, 125c) de l'au moins un dispositif de broyage (20, 120) est associé à un porte-filtre respectif (50a, 50b, 50c) et est configuré pour être actionné, lors de d'utilisation, par un utilisateur en fonction de l'élément d'identification (55a, 55b, 55c) du porte-filtre à l'intérieur duquel est délivré l'ingrédient broyé.

2. Système selon la revendication 1, **caractérisé en ce que** l'au moins un élément de sélection (25a, 25b, 25c, 125a, 125b, 125c) de l'au moins un dispositif de broyage (20, 120) est associé à un porte-filtre respectif (50a, 50b, 50c) au moyen du même élément d'identification (55a, 55b, 55c), ledit élément de sélection (25a, 25b, 25c, 125a, 125b, 125c) étant doté du même élément d'identification (55a, 55b, 55c) que le porte-filtre auquel il est associé.

3. Système selon la revendication 1 ou 2, **caractérisé en ce que** ledit au moins un élément de commande pour commander la distribution de la boisson (10a, 10a', 10b, 10b', 10c, 10c') d'au moins une unité de distribution (2.1, 2.2, 2. 3) de la machine est associé à un porte-filtre respectif (50a, 50b, 50c) et est configuré pour être actionné, lors de l'utilisation, par un utilisateur en fonction du porte-filtre installé dans l'unité de distribution à partir de laquelle la boisson est distribuée selon le programme de distribution prédéfini correspondant, de préférence ledit au moins un élément de commande pour commander la distribution de la boisson (10a, 10a', 10b, 10b', 10c, 10c') d'au moins une unité de distribution (2. 1, 2.2,2.3) de la machine (1) est associé à un porte-filtre respectif (50a, 50b, 50c), au moyen du même élément d'identification (55a, 55b, 55c), ledit élément de commande de la distribution de la boisson (10a, 10a', 10b, 10b', 10c, 10c') étant doté du même élément d'identification (55a, 55b, 55c) que le porte-filtre (50a, 50b, 50c) auquel il est associé.

4. Système selon l'une quelconque des revendications précédentes, **caractérisé en ce que** ledit élément d'identification (55a, 55b, 55c) est configuré pour être reconnu par un utilisateur, de préférence au moyen d'une reconnaissance visuelle, de préférence ledit élément d'identification (55a, 55b, 55c) comprend au moins une lettre, au moins un nom, au moins un chiffre, au moins une couleur, au moins une forme, au moins un code bidimensionnel, au moins un signe, un usinage de surface, ou une combinaison de ceux-ci.

5. Système selon l'une quelconque des revendications précédentes, comprenant au moins une unité de commande (C) reliée à ladite au moins une machine (1) et à au moins un dispositif de broyage (20, 120), ladite unité de commande permettant de transmettre des données, de préférence dans les deux sens, entre ladite au moins une machine (1) et au moins un dispositif de broyage (20, 120).

6. Système selon la revendication 5, **caractérisé en ce que** les données transmises par au moins un dispositif de broyage (20, 120) à au moins une machine (1) comprennent des données relatives à la dose sélectionnée par l'opérateur au moyen de l''au moins un élément de sélection (25a, 25b, 25c, 125a, 125b, 125c) du dispositif de broyage et délivrée par le dispositif de broyage (20, 120), ces données étant envoyées à au moins une unité de distribution (2.1, 2.2, 2. 3) de la machine, de préférence à une ou plusieurs unités de distribution (2.1, 2.2, 2.3) de la machine, de préférence les données étant envoyées par ledit dispositif de broyage à une ou plusieurs unités de distribution de la machine, précédemment associées à un dispositif de broyage (20, 120).

7. Système selon la revendication 6, **caractérisé en ce que** ladite unité de commande (C) est configurée pour activer au moins un élément de commande pour commander la distribution de la boisson (10a, 10a', 10b, 10b', 10c, 10c') d'une unité de distribution en fonction des données relatives à la dose sélectionnée par l'opérateur au moyen de l'au moins un élément de sélection (25a, 25b, 25c, 125a, 125b, 125c) du dispositif de broyage.

8. Système selon l'une quelconque des revendications 5 à 7, **caractérisé en ce que** les données transmises par au moins une machine (1) à au moins un dispositif de broyage (20, 120) comprennent des données relatives à la régulation d'au moins un paramètre de broyage, de préférence ces paramètres comprennent la position de la meule, ou la position relative des meules, ou le temps de broyage, ou le poids de l'ingrédient, ou une combinaison de ceux-ci, de préférence ladite machine (1) comprend au moins un compteur de pression (7) et/ou un débitmètre (6) pour au moins une unité de distribution (2. 1, 2.2, 2.3), qui sont configurés pour mesurer la pression et/ou le débit pendant l'étape de distribution, lesdites données relatives au réglage d'au moins un paramètre de broyage étant calculées sur la base d'un écart d'au moins une valeur de pression et/ou de débit mesurée par rapport à un profil de pression et/ou de débit prédéterminé associé à un programme de distribution.

9. Procédé de distribution d'une boisson, de préférence un café expresso, dans lequel au moins un porte-filtre (50a, 50b, 50c) est rempli d'au moins une dose prédéterminée d'ingrédient moulu, de préférence au moyen d'un système 100 selon l'une quelconque des revendications précédentes, le procédé comprenant les étapes consistant à :
- positionner un porte-filtre (50a, 50b, 50c) doté d'au moins un élément d'identification (55a, 55b, 55c) dans un dispositif de broyage (20, 120), ledit élément d'identification (55a, 55b, 55c) indiquant la dose prédéterminée d'un ingrédient broyé ;
- sélectionner au moins une dose associée à au moins un élément d'identification (55a, 55b, 55c) du porte-filtre (50a, 50b, 50c) positionné dans le dispositif de broyage au moyen d'au moins un élément de sélection (25a, 25b, 25c, 125a, 125b, 125c) du dispositif de broyage en fonction de l'élément d'identification (55a, 55b, 55c) du porte-filtre dans lequel est délivré l'ingrédient broyé ;
- délivrer la dose prédéterminée correspondant à l'élément de sélection (25a, 25b, 25c, 125a, 125b, 125c) sélectionné ;
- déplacer le porte-filtre (55a, 55b, 55c) dans au moins une unité de distribution (2.1, 2.2, 2.3) d'une machine (1) pour distribuer la boisson à partir de l'ingrédient moulu contenu dans le porte-filtre ;
- distribuer la boisson en actionnant ledit au moins un élément de commande pour commander la distribution de la boisson (10a, 10a', 10b, 10b', 10c, 10c') d'au moins une unité de distribution (2.1, 2.2, 2.3).

10. Procédé selon la revendication 9, **caractérisé en ce que** la sélection d'au moins une dose prédéterminée au moyen dudit au moins un élément de sélection (25a, 25b, 25c, 125a, 125b, 125c) du dispositif de broyage (20, 120) comprend la reconnaissance, de préférence la reconnaissance visuelle, par l'utilisateur, de l'élément d'identification du porte-filtre et l'actionnement manuel, par un utilisateur, dudit au moins un élément de sélection (25a, 25b, 25c, 125a, 125b, 125c) du au moins un dispositif de broyage (20, 120) associé à un porte-filtre respectif (50a, 50b, 50c).

11. Procédé selon l'une quelconque des revendications 9 à 10, **caractérisé en ce que** l'étape de distribution de la boisson comprend l'étape de sélection d'au moins un programme de distribution prédéfini au moyen d'au moins un élément de commande pour commander la distribution de la boisson (10a, 10a', 10b, 10b', 10c, 10c') d'au moins une unité de distribution (2.1, 2.2, 2.3),
en fonction de l'élément d'identification (55a, 55b, 55c) du porte-filtre installé dans l'unité de distribution (2.1, 2.2, 2.3) à partir de laquelle la boisson est distribuée selon le programme de distribution prédéfini correspondant.

12. Procédé selon la revendication 11, **caractérisé en ce que** l'étape de sélection du programme de distribution comprend la reconnaissance, de préférence visuelle, par un utilisateur, de l'élément d'identification (55a, 55b, 55c) du porte-filtre et l'actionnement manuel, par l'utilisateur, dudit élément de commande pour commander la distribution de la boisson (10a, 10a', 10b, 10b', 10c, 10c') d'au moins une unité de distribution (2. 1, 2.2, 2.3) de la machine associée à un porte-filtre respectif (50a, 50b, 50c).

13. Procédé selon l'une quelconque des revendications 9 à 12, comprenant l'étape de transmission, d'au moins un dispositif de broyage (20, 120) à au moins une unité de distribution d'une machine (1), des données relatives à la dose d'ingrédient broyé que l'opérateur a sélectionnée au moyen d'au moins un élément de sélection (25a, 25b, 25c, 125a, 125b, 125c) du dispositif de broyage et délivrées par le dispositif de broyage (20, 120), de préférence lesdites données relatives à la dose sélectionnée par l'opérateur au moyen d'au moins un élément de sélection (25a, 25b, 25c, 125a, 125b, 125c) du dispositif de broyage (20, 120) sont envoyées à une ou plusieurs unités de distribution (2. 1, 2.2, 2.3) de la machine, de préférence les données étant envoyées dudit dispositif de broyage à une ou plusieurs unités de distribution de la machine, précédemment associées à un dispositif de broyage (20, 120).

14. Procédé selon l'une quelconque des revendications 9 à 13, **caractérisé en ce que** l'étape de distribution de la boisson au moyen dudit au moins un élément de commande pour commander la distribution de la boisson (10a, 10a', 10b, 10b', 10c, 10c') est précédée par l'étape d'activation d'au moins un élément de commande pour commander la distribution de la boisson (10a, 10a', 10b, 10b', 10c, 10c') d'une unité de distribution en fonction des données relatives à la dose sélectionnée par l'opérateur au moyen du au moins un élément de sélection (25a, 25b, 25c, 125a, 125b, 125c) du dispositif de broyage.

15. Procédé selon l'une quelconque des revendications 9 à 14, comprenant au moins une étape de réglage d'au moins un paramètre de broyage, ces paramètres comprennent la position des meules, ou la position relative des meules, ou la durée du broyage, ou le poids de l'ingrédient, ou une combinaison de ceux-ci, de préférence ladite étape de réglage d'au moins un paramètre de broyage est effectuée sur la base de l'écart d'au moins une valeur de pression et/ou de débit mesurée par rapport à un profil de pression et/ou de débit prédéterminé et associé à un programme de distribution.
